# EUROPÄISCHE PATENTSCHRIFT

(11) **EP 0 547 063 B1**
(45) Veröffentlichungstag und Bekanntmachung des Hinweises auf die Patenterteilung: **02.11.1994**
(21) Anmeldenummer: 91913361.1
(22) Anmeldetag: 22.07.1991
(51) Int. Cl.: E04H 6/24

(54) **FLURPARKER FÜR KRAFTFAHRZEUGE**
VEHICLE-PARKING SYSTEM
SYSTEME DE PARCAGE DE VEHICULES A MOTEUR

(30) Priorität: 08.09.1990 DE 4028590
(43) Veröffentlichungstag der Anmeldung: 23.06.1993
(73) Patentinhaber: OTTO WÖHR GMBH, 70825 Korntal-Münchingen (DE)
(72) Erfinder: ELSNER, Thomas, D-7268 Gechingen (DE)
(74) Vertreter: Hoeger, Stellrecht & Partner
(86) Internationale Anmeldenummer: EP9101369
(87) Internationale Veröffentlichungsnummer: WO9204517

(56) Entgegenhaltungen:
- EP-A-02 327 25
- WO-A-89/05386
- FR-A- 1 244 432
- US-A- 2 598 750

## Beschreibung

Die Erfindung betrifft einen Flurparker für Kraftfahrzeuge mit einer Anzahl von Parkpaletten, die auf senkrecht zueinander gerichteten, in einer Ebene angeordneten Fahrbahnen verschiebbar sind und jeweils einen eigenen Antrieb aufweisen, der über längs der Fahrbahnen mit Stromschienen im Eingriff stehende Stromabnehmer mit elektrischer Energie gespeist wird.

Es sind Parkpaletten bekannt (WO-A-8 905 386), die jeweils einen eigenen Antrieb haben und die ihre für den Fahrbetrieb notwendige Energie ebenso wie die notwendigen Steuersignale über Kabel erhalten, die an jeder Parkpalette einzeln festgelegt sind und die zu einem ortsfesten Anschluß führen. Die Verwendung derartiger Kabel beschränkt die Bewegungsmöglichkeit der Parkpaletten.

Es ist weiterhin bekannt (WO-A-8 905 386, US-A-2 598 750), diese Kabelverbindungen dadurch zu ersetzen, daß jeder Parkpalette Stromabnehmer zugeordnet werden, die mit ortsfesten Stromschienen im Eingriff stehen und somit die für den paletteneigenen Antrieb notwendige Energie aufnehmen.

Durch entsprechende Polung der zugeführten Speisespannung läßt sich die Richtung des Vorschubes längs einer bestimmten Fahrbahn bestimmen, es ist jedoch ohne die zusätzliche Übertragung von Steuersignalen auf den paletteneigenen Antrieb nicht möglich, das Fahrverhalten der Palette daran anzupassen, ob die Palette längs einer Fahrbahn oder längs einer anderen, senkrecht dazu verlaufenden Fahrbahn bewegt werden soll. Um hier richtig zu arbeiten, benötigt der Palettenantrieb entweder eine Information darüber, daß nur der für eine Fahrbahn geeignete Antrieb betätigt werden soll oder nur der für eine senkrecht dazustehende andere Fahrbahn, oder aber der Antrieb der Parkpalette benötigt Informationen darüber, wie das Anfahr- und Abbremsverhalten gewählt werden soll, das bei der Verschiebung längs einer Fahrbahn verschieden sein kann von dem, daß bei der Verschiebung längs einer senkrecht dazu verlaufenden Fahrbahn günstig ist.

Es ist Aufgabe der Erfindung, einen gattungsgemäßen Flurparker so auszubilden, daß ohne eine unmittelbare Übertragung eigener Steuersignale auf die Parkpalette trotzdem das Fahrverhalten durch paletteneigenen Antrieb allein durch externe Steuermittel entsprechend der Wahl der jeweiligen Fahrbahn beeinflußt werden kann. Diese Aufgabe wird bei einem Flurparker der eingangs beschriebenen Art erfindungsgemäß dadurch gelöst, daß jede Parkpalette mindestens zwei getrennte Paare von Stromabnehmern trägt, daß eine ortsfeste Auswahleinrichtung vorgesehen ist, die die Stromschienen und die Stromabnehmer relativ zueinander derart verschiebt, daß die beiden Paare jeweils nur mit den Stromschienen der einen oder der senkrecht dazu verlaufenden anderen Stromschienen im Eingriff stehen, und daß die beiden Stromabnehmerpaare mit einer Diskriminatorschaltung verbunden sind, die in Abhängigkeit davon, an welchem Stromabnehmerpaar Spannung anliegt, verschiedene Fahrprogramme für den Antrieb ansteuert.

Durch die Aufnahme der für den Antrieb notwendigen Energie über getrennte Stromabnehmerpaare, die nur bei der Verschiebung längs jeweils einer der beiden senkrecht zueinander stehenden Fahrbahnen wirksam sind, kann die Parkpalette unterscheiden, längs welcher der beiden Fahrbahnen die Vorschubbewegung erfolgen wird, und entsprechend kann eine Auswahl des Fahrprogrammes erfolgen, beispielsweise kann die zugeführte Energie nur einem Antriebsmotor zugeführt werden, der für die Bewegung längs einer der beiden Fahrbahnen zuständig ist.

Wesentlich ist, daß eine ortsfeste und somit bezüglich der Parkpalette externe Vorrichtung den selektiven Eingriff des einen oder des anderen Stromabnehmerpaares mit den zugeordneten Stromschienen besorgt, so daß keine parkpaletteneigenen Steuerungen notwendig sind.

Eine besonders vorteilhafte Konstruktion ergibt sich, wenn jede Parkpalette einen einzigen Antrieb aufweist, der dauerhaft mit Antriebsrädern verbunden ist, die senkrecht zueinander verlaufenden Fahrbahnen zugeordnet sind, und wenn die Auswahleinrichtung gleichzeitig entweder eine Fahrbahn oder eine senkrecht dazu verlaufende Fahrbahn mit den Antriebsrädern in Eingriff bringt. Wenn einer Parkpalette elektrische Energie zum Verfahren zugeführt wird, bewegt ein solcher Antrieb also immer die Laufräder für Fahrbahnen beider Art, also für jeweils senkrecht zueinander stehende Fahrbahnen. Fahrbahnen jedoch werden den Antriebsrädern selektiv zugeordnet, d.h. die externe Auswahleinrichtung bietet der Parkpalette entweder eine Fahrbahn oder eine senkrecht dazustehende Fahrbahn an, so daß jeweils nur Antriebsräder, die einer Fahrtrichtung zugeordnet sind, mit einer Fahrbahn in Eingriff gelangen, d. h. die Parkpalette fährt dann trotz dauerhaften Antriebs beider Arten von Antriebsrädern nur in jeweils einer Richtung.

Dabei ist es vorteilhaft, wenn die Fahrbahnen und die Stromschienen jeder Fahrtrichtung durch die Auswahleinrichtung gemeinsam betätigbar sind, so daß beim Wirksamwerden einer Fahrbahn gleichzeitig auch die selektive Verbindung der zugeordneten Stromschienen mit dem entsprechenden Stromabnehmerpaar der Parkpalette erfolgt, wodurch der Parkpalette in der beschriebenen Weise die Information darüber zukommt, welche Fahrbahn wirksam ist.

Besonders vorteilhaft ist es dabei, wenn mindestens eine der beiden senkrecht zueinander stehenden Fahrbahnen durch die Auswahleinrichtung selektiv anhebbar bzw. absenkbar ist. Dadurch kann diese Fahrbahn selektiv mit den Antriebsrädern in Eingriff gebracht oder von ihnen getrennt werden. Dasselbe gilt dann auch hinsichtlich der zugeordneten Stromschienen.

Bei einer bevorzugten Ausführungsform ist vorgesehen, daß die Fahrprogramme jeder der beiden senkrecht zueinander stehenden Fahrtrichtungen verschiedene Anfahr- und Bremsverhalten und/oder verschiedene Vorschubgeschwindigkeiten hervorrufen. So ist es beispielsweise möglich, bei einer Verschiebebewegung quer zur Längsachse der Parkpaletten relativ hohe Anfahr- und Abbremsbeschleunigungen zu verwenden, da auf der Parkpalette stehende Kraftfahrzeuge bei diesen Beschleunigungen quer zur Fahrtrichtung beschleunigt werden. Dagegen muß das Anfahrverhalten und das Abbremsverhalten bei einer Bewegung längs der Längsachse einer Parkpalette so ausgewählt werden, daß ein auf der Parkpalette stehendes Kraftfahrzeug auch bei nicht angezogener Handbremse und nicht eingelegtem Gang nicht auf der Parkpalette verfahren wird. Bei einer Bewegung in Palettenlängsrichtung muß also das Anfahren und das Abbremsen sehr viel behutsamer erfolgen als bei einer Querbewegung.

Die nachfolgende Beschreibung eines bevorzugten Ausführungsbeispiels der erfindungsgemäßen Fahrtrichtungserkennung dient im Zusammenhang mit der Zeichnung der weiteren Erläuterung. Es zeigen:
- Fig. 1:: in perspektivischer Darstellung einen Flurparker, mit einem unter Straßenniveau liegenden Parkdeck, das Schienen aufweist, auf denen Automobile tragende Parkpaletten verschiebbar sind, wobei die Erfindung Anwendung findet, und
- Fig. 2:: die an der Unterseite der in der Fig. 1 gezeigten Parkpaletten angebrachten Vorrichtungen (von oben gesehen), wobei auch ihre räumliche Anordnung bezüglich der Parkpalette und sich kreuzender Schienenpaare dargestellt ist.

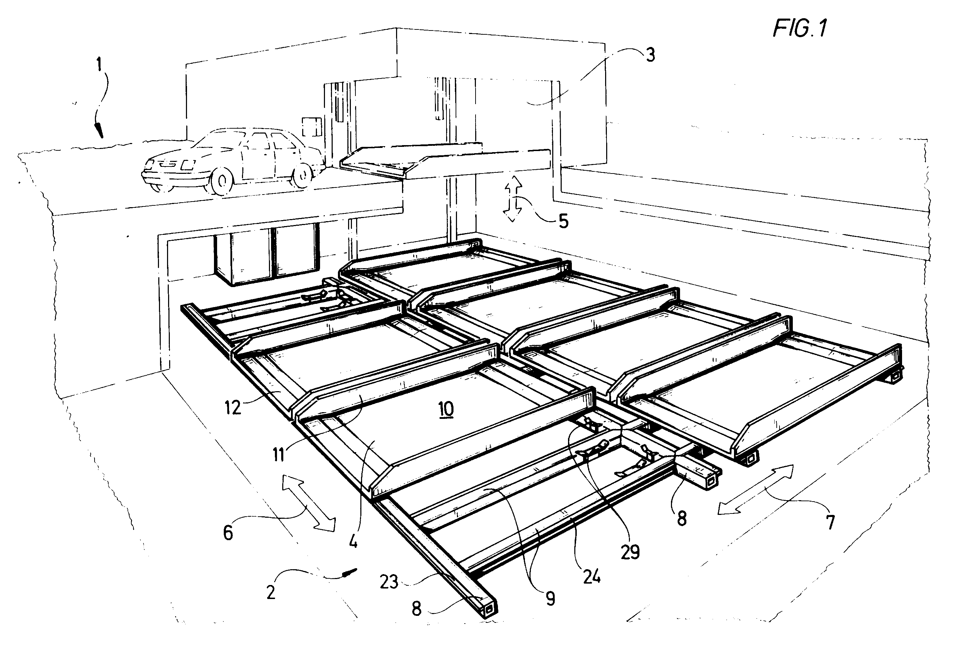

Ein in der Fig. 1 gezeigter Flurparker 1 weist zur besseren Anschaulichkeit nur ein unter Straßenniveau liegendes Parkdeck 2 auf. Üblicherweise haben die Flurparker mehrere übereinander angeordnete Parkdecks. Zum Flurparker gehört ein Aufzug 3 zum Transportieren von Parkpaletten 4 in der vertikalen Richtung 5, beispielsweise vom Niveau der Straße auf das des Parkdecks 2.

Das Parkdeck 2 weist Parkpositionen in einer Matrixanordnung mit zwei Zeilen und drei Kolonnen auf. Die Anordnung könnte auch mehr Zeilen und/oder Kolonnen aufweisen oder einem nicht rechteckigen Grundriß des Parkdecks angepaßt sein. Jede Parkposition ist so groß, daß eine Parkpalette 4 für je ein Automobil darauf Platz hat. Zum Verschieben der Parkpaletten sind zueinander senkrecht verlaufende Schienenpaare 8 bzw. 9 vorhanden. In jeder Parkposition kreuzen sich je ein Schienenpaar 8 und 9. Auf den Schienen lassen sich die Parkpaletten senkrecht oder parallel zu ihrer Längsachse in die Querrichtung 6 bzw. in die Längsrichtung 7 verschieben. Während die Schienenpaare 8 auf einem festgelegten einheitlichen Niveau liegen, können - was der Fig. 1 nicht zu entnehmen ist - die in der Längsrichtung 7 verlaufenden Schienenpaare 9 über das Niveau der Schienen 8 angehoben oder unter dieses abgesenkt werden. Auf der Unterseite der Parkpaletten 4 sind je acht - in der Fig. 1 nicht gezeigte - Rollen angebracht. Die Rollen bilden zwei zueinander senkrecht ausgerichtete Rollensätze 13 und 14, die passend zu den Schienenpaaren 8 bzw. 9 angeordnet sind. Die Parkpaletten 4 ruhen also mit den Rollen auf den Schienen, wobei, wenn die Schienenpaare nicht niveaugleich verlaufen, die einzelnen Parkpaletten entweder auf dem Schienenpaar 8 oder auf dem Schienenpaar 9 aufliegen. Vor jeder Verschiebung einer Parkpalette 4 muß - gegebenenfalls durch Anheben oder Absenken des unter der Parkpalette 4 befindlichen Schienenpaars 9 - dafür gesorgt werden, daß nur die Rollen Schienenkontakt haben, die dem in Richtung der gewünschten Verschieberichtung verlegten Schienenpaar zugeordnet sind.

Seitlich an den Schienen - und zwar in derselben Ausrichtung wie diese - ist je eine Stromschiene 23 oder 24 befestigt. Über diese wird der an jeder Parkpalette 4 angebrachte Motor mittels an der Parkpalette angebrachten - in der Fig. 1 nicht gezeigten - Stromabnehmern mit Strom versorgt. Die Parkpaletten, die alle identisch ausgebildet sind, haben eine so große rechteckige Grundfläche, daß alle Personenwagen gängiger Größe auf ihnen Platz finden. Die Bodenplatte 10 der Parkpaletten wird entlang ihrer Längskanten durch niedrige Wände 11 begrenzt, die mindestens an einem Ende zur Bodenplatte 10 hin abgeschrägt sind. An den beiden Enden in Richtung der Längsachse geht die Bodenplatte in rampenartig nach oben verlaufende Schrägen 12 mit geringer Steigung über.

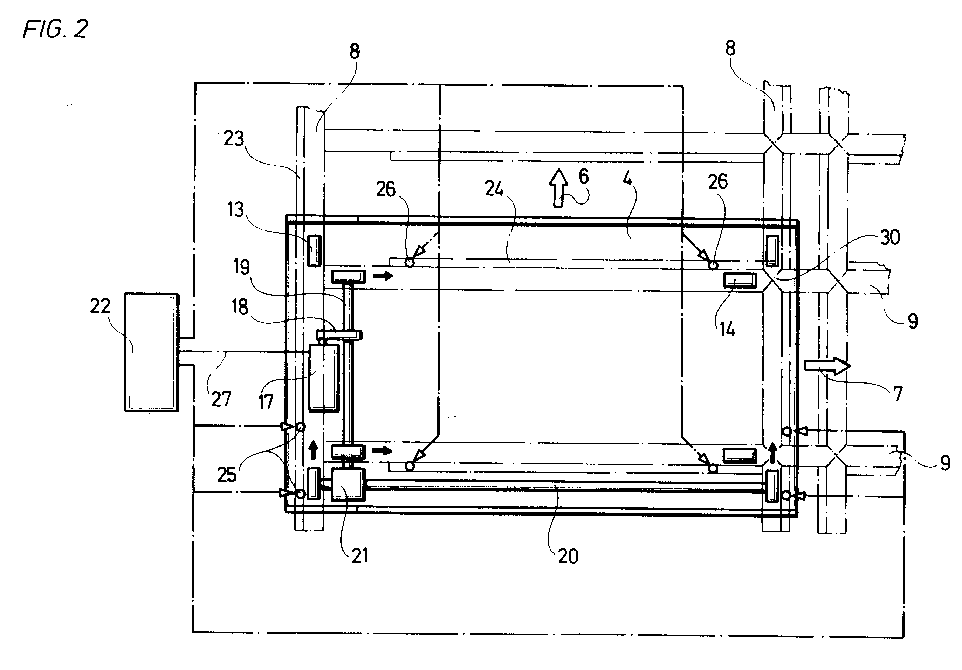

Die Figur 2 zeigt (von oben gesehen) die an der Unterseite einer Parkpalette 4 angebrachten Bewegungs-, Steuerungs- und Stromversorgungselemente und macht auch deren räumliche Anordnung bezüglich der Parkpalette 4, zweier sich kreuzender Schienenpaare 8 und 9 und zweier Paare von Stromschienen 23 und 24 deutlich. Der Übersichtlichkeit halber und den tatsächlichen Verhältnissen widersprechend sind die Steuerung und ein Teil der Stromzuführung in der Figur 2 - schematisch - so dargestellt, als ob sie nicht körperlich mit der Parkpalette 4 verbunden wären.

An der Unterseite der Parkpalette 4 sind die beiden Rollensätze 13 und 14 angebracht. Die Achsen der zu einem Rollensatz gehörenden Rollen verlaufen parallel zueinander, wobei die Rollenachsen des einen Satzes parallel zur Längsachse der Parkpalette 4 und die Rollenachsen des anderen Satzes dazu senkrecht verlaufen. Die Rollenachsen haben einen einheitlichen Abstand von der Unterseite der Parkpalette 4. Die zu einem Satz gehörenden Rollen haben von der Längs- bzw. Querachse der Parkpalette denselben Abstand, wobei dieser Abstand beim Rollensatz 13, bei dem die Rollenachsen parallel zur Längsachse verlaufen, gleich dem halben Schienenabstand des Schienenpaars 8 und beim Rollensatz 14 gleich dem halben Schienenabstand des Schienenpaars 9 ist. Auf jeder Seite der Längs- bzw. Querachse befinden sich zwei Rollen. Zwei Rollen jedes Rollensatzes, welche drehfest auf einer Welle 19 bzw. 20 sitzen, werden mittels des Motors 17 angetrieben, welcher über ein Motorgetriebe 18, die in Querrichtung verlaufende Welle 19 antreibt, die wiederum über ein Winkelgetriebe 21 die in Längsrichtung verlaufende Welle 20 antreibt. D. h., in anderen Worten, daß die angetriebenen Rollen beider Rollensätze immer gemeinsam angetrieben werden. Durch hydraulisches Absenken oder Anheben des Schienenpaars 9 unter oder über das Niveau des fest mit dem Boden des Parkdecks 2 verbundenen Schienenpaars 8 wird dafür gesorgt, daß die Parkpalette 4 beim Verschieben immer nur auf einem Schienenpaar aufliegt und deshalb nur jeweils in einer Richtung bewegt werden kann.

Der Schienenabstand ist bei dem in der Querrichtung 7 verlaufenden Schienenpaar 8 etwas kleiner als die Länge einer Parkpalette 4 und bei dem in Längsrichtung verlaufenden Schienenpaar 9 etwas kleiner als die Breite einer Parkpalette 4. Der Abstand zwischen benachbarten Schienenpaaren 8 ist etwas größer als die Differenz zwischen der Länge der Parkpalette 4 und dem zugehörigen Schienenabstand und der Abstand zwischen benachbarten Schienenpaaren 9 ist etwas größer als die Differenz zwischen der Breite einer Parkpalette 4 und dem zugehörigen Schienenabstand.

Im Kreuzungspunkt 30 zweier Schienen weisen diese je zwei einander zugewandte, sich keilförmig verjüngende Oberflächenbereiche auf, deren Spitzen sich im Kreuzungspunkt fast berühren, wobei die genannten Oberflächenbereiche beider Schienen sich von oben gesehen zu einem Quadrat ergänzen. Damit wird erreicht, daß bei der Verschiebung der Parkpalette 4 über einen Kreuzungspunkt 30 hinweg trotz des unterschiedlichen Niveaus der Schienen die Rolle im Kreuzungspunkt über eine praktisch durchgehende "Brücke" rollt und keinen Graben überwinden muß.

Die Stromversorgung für den Motor 17 erfolgt über die an den Schienen befestigten Stromschienen 23 bzw. 24, über an der Unterseite der Parkpalette 4 befestigte Stromabnehmer 25 und 26, von denen je vier vorhanden sind, über die Steuerung 22 und über die Verbindungsleitung 27 zwischen der Steuerung 22 und dem Motor 17. Zu jedem Schienenpaar 8 bzw. 9 gehört ein Paar von Stromschienen 23 bzw. 24, die an der Außenseite der Schienenpaare angebracht sind und dieselbe Ausrichtung wie die zugehörigen Schienen haben. Die Stromschienen sind dort unterbrochen, wo zwei Schienen sich kreuzen. Die Stromabnehmer 25 haben alle von der Querachse der Parkpalette 4 denselben Abstand, der gleich dem halben Abstand der zum Schienenpaar 8 gehörenden Stromschienen 23 ist. Entsprechend haben die Stromabnehmer 26 von der Längsachse denselben Abstand, der gleich dem halben Abstand der zum Schienenpaar 9 gehörenden Stromschienen 24 ist. D. h. daß, wenn ein Rollensatz über einem Schienenpaar positioniert ist, die Stromabnehmer über den Stromschienen positioniert sind.

Pro Stromschiene 23 bzw. 24 sind zwei Stromabnehmer 25 bzw. 26 vorgesehen. Theoretisch würde für die Stromversorgung ein Stromabnehmer pro Stromschiene genügen. Zwei Stromabnehmer sind deshalb erforderlich, weil die Stromschienen an den Kreuzungspunkten 30 unterbrochen sind. Wäre pro Stromschiene nur ein Stromabnehmer vorhanden, würde die Stromzuführung beim Verschieben während der Zeitspanne, in der der Stromabnehmer den Kreuzungspunkt passiert, unterbrochen sein. Ein zweiter, zum ersten parallel geschalteter Stromabnehmer pro Stromschiene verhindert dies. Der Stromabnehmer, der den Kreuzungspunkt passiert, wird mittels einer an der Unterseite der Parkpalette angebrachten - in der Fig. 2 nicht gezeigten Anordnung - im Zusammenwirken mit einer in der Fig. 1 gezeigten Führungsschiene 29 über die Lücke weggehoben.

Die Führungsschiene 29 ragt horizontal aus der von der Stromschiene abgewandten Seite der Schiene heraus. Sie verläuft entlang der Seite und hat in der vertikalen, entlang der Schiene verlaufenden Ebene das Profil einer nach oben offenen flachen Wanne. Die an der Parkpalette 4 angebrachte Anordnung besteht aus einem Bügel und einem zweiarmigen, drehbar aufgehängten Hebel, an dessen Enden der Bügel und der Stromabnehmer 25 oder 26 befestigt sind. Die Länge der Hebelarme und die Gewichte von Bügel und Stromabnehmer sind so aufeinander abgestimmt, daß der Stromabnehmer nach unten zur Stromschiene hin zieht. Der Bügel ist so angeordnet, daß er beim Verschieben der Parkpalette streifend an der Führungsschiene 29 entlanggeführt wird, und zwar an der Außenseite der Wanne. Das Wannenprofil erzwingt eine Ablenkung des Bügels nach unten und damit ein Anheben des Stromabnehmers. Nachdem der Bügel die Führungsschiene 29 passiert hat, bewegt er sich wieder nach oben und entsprechend der Stromabnehmer nach unten. Die Positionierung des Bügels in Bezug zum Stromabnehmer und die Länge des Hebels sind dabei in der Weise an die Positionierung der Führungsschiene 29 in Bezug zum Kreuzungspunkt 30 angepaßt, daß während der Bügel an der Führungsschiene entlanggeführt wird, der Stromabnehmer über die Lücke zwischen zwei Stromschienenabschnitten gehoben wird.

Immer dann, wenn ein Rollensatz auf einem Schienenpaar aufsteht, ist ein leitender Kontakt zwischen den zugehörigen Stromschienen und den über ihnen positionierten Stromabnehmern vorhanden. Steht ein Rollensatz auf einem Schienenpaar auf und wird der Motor 17 eingeschaltet, dann wird die Parkpalette 4 in der Richtung, in welcher das Schienenpaar verlegt ist, verschoben. D. h., daß die Stromzuführung immer über die Stromschienen 23 oder 24 erfolgt, an denen entlang eine Verschiebung stattfindet oder anschließend stattfinden soll. Wird durch Anheben oder Absenken des Schienenpaars 9 der auf den Schienen aufsitzende Rollensatz und damit auch die Verschiebungsrichtung gewechselt, findet auch ein Wechsel der Stromschienen statt, von denen der Strom abgenommen wird. Man kann also, indem man die Stromabnehmer identifiziert, über welche die Stromzufuhr erfolgt, die Verschiebungsrichtung bestimmen und dann entsprechend die Verschiebung in Längs- oder Querrichtung in der gewünschten Weise steuern. Bei der in der Figur 2 gezeigten Ausführungsform geschieht dies vollautomatisch, indem eine Steuerung 22 für den Motor 17 aus der Information, über welche Stromschiene bzw. über welche Stromabnehmer ihr der Strom zugeführt wird, das Signal erzeugt, welches das Steuerprogramm für die Längs- oder Querverschiebungen der Parkpalette 4 aktiviert. Mit dem Steuerprogramm werden die Verschiebungsstrecke, die Beschleunigung beim Anfahren, die Geschwindigkeit während der gleichförmigen Verschiebung und die Verzögerung beim Abbremsen gesteuert. Die Information über die Verschiebungsrichtung ist insbesondere deshalb wichtig, weil - wie weiter oben dargelegt worden ist - die Verschiebung entlang der Längsrichtung 6 wesentlich behutsamer, d. h. mit geringerer Beschleunigung und Verzögerung beim Anfahren bzw. Abbremsen erfolgen muß, als die Verschiebung senkrecht dazu.

Eine eindeutige Information wird in der dargelegten Weise nur dann nicht erhalten, wenn - was während des Absenkens und Anhebens des Schienenpaars 9 jeweils für einen kurzen Moment der Fall ist - die beiden Schienenpaare 8 und 9 dasselbe Niveau haben und infolgedessen alle Rollen auf den Schienen und alle Stromabnehmer auf den Stromschienen aufstehen. Dieses Problem kann schaltungstechnisch leicht dadurch gelöst werden, daß der Motor nur dann eingeschaltet wird, wenn die Stromzufuhr nur über ein Stromschienenpaar erfolgt.

Beim Einparken eines Automobils in eine bestimmte Parkposition im Flurparker 1, z.B. in die in der Figur 1 dem Aufzug diagonal gegenüberliegende Parkposition auf dem Parkdeck 2, ist der Ablauf der folgende:
Zunächst ist anzumerken, daß eine Voraussetzung für das Verschieben einer Parkpalette 4 auf dem Parkdeck ist, daß nicht alle Parkpositionen mit Parkpaletten belegt sind.

Das Automobil fährt auf eine im Aufzug auf Straßenniveau stehende Parkpalette 4. Nachdem, z.B. mittels Lichtschranken, festgestellt worden ist, daß es in der richtigen, bevorzugt mittigen Position auf der Parkpalette 4 steht, wird diese nach unten auf das Niveau des Parkdecks 2 gefahren. Im nächsten Schritt wird die im Aufzug stehende Parkpalette 4 in die freie Parkposition hinten links (siehe Figur 1) verschoben. Dafür sind auf dem Boden des Aufzugs zwei sich kreuzende Schienenpaare 8 und 9 vorhanden, welche mit den entsprechenden Schienenpaaren auf dem Parkdeck fluchten. Für den Verschiebeschritt ist es erforderlich, daß das Schienenpaar 9 im Aufzug und in der freien Parkposition über das Niveau des Schienenpaars 8 angehoben ist, damit der Rollensatz 14 auf dem Schienenpaar 9 aufliegt. Bei dieser Schienenstellung stehen die Stromabnehmer 26 auf den am Schienenpaar 9 befestigten Stromschienen 24 auf. Infolgedessen erhält die Steuerung 22 die Information, daß als nächstes eine Verschiebung in der Längsrichtung 7 folgen wird, die eine bestimmte Länge hat und behutsam durchzuführen ist. Nun kann die Parkpalette 4 mit dem Automobil in die Längsrichtung 7 zu der Parkposition hinten links verschoben werden. Mindestens zehn weitere Verschiebeoperationen sind erforderlich, um die Parkpalette mit dem Automobil in die vordere linke Parkposition zu bringen.

An den Verschiebeoperationen sind die Parkpalette 4 mit dem Automobil, die beiden anderen auf der linken Seite und die drei hinteren auf der rechten Seite des Parkdecks positionierten Parkpaletten 4 beteiligt. Vor jeder Änderung der Verschieberichtung muß das Schienenpaar 9 angehoben oder abgesenkt werden, wodurch gleichzeitig die stromführenden Stromabnehmner gewechselt werden, so daß die Steuerung jeweils weiß, ob die nächste Verschiebung behutsam in Richtung der Längsrichtung 7 oder möglichst schnell in der Querrichtung 6 durchzuführen ist.

Das Ein- und Ausparken erfolgt bevorzugt programmgesteuert über einen Computer, um das Einparken in Bezug auf die Anzahl der Verschiebungsoperationen, der Anzahl der Verschiebungsoperationen in die Längsrichtung 7 und die Anzahl der Anhebungen bzw. der Absenkungen des Schienenpaars 9 im Hinblick auf ein möglichst zeitsparendes Einparken zu optimieren.

## Patentansprüche

1. Flurparker mit einer Anzahl von Parkpaletten, die auf senkrecht zueinander gerichteten, in einer Ebene angeordneten Fahrbahnen verschiebbar sind und jeweils einen eigenen Antrieb aufweisen, der über längs der Fahrbahnen mit Stromschienen im Eingriff stehende Stromabnehmer mit elektrischer Energie gespeist wird,
**dadurch gekennzeichnet,**
daß jede Parkpalette (4) mindestens zwei getrennte Paare von Stromabnehmern (25, 26) trägt, daß eine ortsfeste Auswahleinrichtung (Anhebe- und Absenkvorrichtung des Schienenpaars 9) vorgesehen ist, die die Stromschienen (23, 24) und die Stromabnehmer (25, 26) relativ zueinander derart verschiebt, daß die beiden Paare der Stromabnehmer (25, 26) jeweils nur mit den Stromschienen (23, 24) der einen oder der senkrecht dazu verlaufenden anderen Fahrtrichtung im Eingriff stehen, und daß die beiden Stromabnehmerpaare (25, 26) mit einer Diskriminatorschaltung (steuerung 22) verbunden sind, die in Abhängigkeit davon, an welchem Stromabnehmerpaar Spannung anlegt, verschiedene Fahrprogramme für den Antrieb (17) ansteuert.

2. Flurparker nach Anspruch 1, dadurch gekennzeichnet, daß jede Parkpalette (4) einen einzigen Antrieb (17) aufweist, der dauerhaft mit Antriebsrädern (13, 14) verbunden ist, die senkrecht zueinander verlaufenden Fahrbahnen (8, 9) zugeordnet sind und daß die Auswahleinrichtung gleichzeitig entweder eine Fahrbahn (8) oder eine senkrecht dazu verlaufende Fahrbahn (9) mit den Antriebsrädern (13, 14) in Eingriff bringt.

3. Flurparker nach Anspruch 2, dadurch gekennzeichnet, daß die Fahrbahnen (8, 9) und die Stromschienen (23, 24) jeder Fahrtrichtung durch die Auswahleinrichtung gemeinsam betätigbar sind.

4. Flurparker nach Anspruch 3, dadurch gekennzeichnet, daß mindestens eine der Fahrbahnen (9) durch die Auswahleinrichtung selektiv anhebbar bzw. absenkbar ist.

5. Flurparker nach einem der voranstehenden Ansprüche, dadurch gekennzeichnet, daß die Fahrprogramme jeder der beiden senkrecht zueinander stehenden Fahrtrichtungen verschiedenes Anfahr- und Bremsverhalten und/oder verschiedene Vorschubgeschwindigkeiten hervorrufen.

## Claims

1. A parking system with a number of parking pallets displaceable over travel tracks which are oriented at right angles to one another and are arranged in a plane, each having a separate drive unit which is supplied with electrical energy via current collectors in engagement with conductor rails along the travel tracks,
**characterised in that**
each parking pallet (4) has at least two separate pairs of current collectors (25, 26), and a stationary selecting device (lifting and lowering device for the rail pair 9) is provided and displaces the conductor rails (23, 24) and the current collectors (25, 26) in relation to one another in such a manner that the two pairs of current collectors (25, 26) are each only in engagement with the conductor rails (23, 24) of one direction of travel, or the other direction of travel extending at right angles to the first, and the two pairs of current collectors (25, 26) are connected to a discriminator circuit (control 22) which controls different travel programs for the drive unit (17) in dependence upon which pair of current collectors is supplied with voltage.

2. A parking system in accordance with claim 1, **characterised in that** each parking pallet (4) has a single drive unit (17) which is permanently connected to drive wheels (13, 14) which are associated with tracks (8, 9) extending at right angles to one another, and the selecting device simultaneously brings either one track (8), or another track (9) extending at right angles thereto, into engagement with the drive wheels (13, 14).

3. A parking system in accordance with claim 2, **characterised in that** the tracks (8, 9) and the conductor rails (23, 24) for each direction of travel can be actuated together by means of the selecting device.

4. A parking system in accordance with claim 3, **characterised in that** at least one of the tracks (9) can be selectively lifted or lowered by means of the selecting device.

5. A parking system in accordance with one of the preceding claims, **characterised in that** the travel programs of each of the two directions of travel oriented at right angles to one another bring about different starting and braking behaviour and/or different advance speeds.

## Revendications

1. Parc comportant un certain nombre de palettes de parc qui peuvent coulisser sur des voies de déplacement orientées perpendiculairement les unes aux autres, disposées dans un plan et présentent chacune un mécanisme d'entraînement propre qui est alimenté en énergie électrique par l'intermédiaire de capteurs de courant qui viennent en prise avec des rails conducteurs de courant le long des voies de déplacement,
caractérisé,
par le fait que chaque palette (4) porte au moins deux paires distinctes de capteurs de courant (25, 26), qu'il est prévu un dispositif fixe de sélection (organe de montée et de descente de la paire de rails 9) qui fait coulisser, les uns par rapport aux autres, les rails conducteurs de courant (23, 24) et les capteurs de courant (25, 26) de façon que les deux paires de capteurs de courant (25, 26) ne soient chaque fois en prise qu'avec les rails conducteurs de courant (23, 24) de l'une des directions de déplacement ou de l'autre, orientée perpendiculairement à celle-ci, et que les deux paires de capteurs de courant (25, 26) sont reliés avec un circuit discriminateur (boîte de commande 22) qui, en fonction de la paire de capteurs de courant à laquelle s'applique la tension, commande différents programmes de déplacement pour le mécanisme d'entraînement (17).

2. Parc selon la revendication 1, caractérisé par le fait que chaque palette (4) présente un unique mécanisme d'entraînement (17) qui est relié en permanence à des galets d'entraînement (13, 14) qui correspondent aux voies de déplacement (8, 9) orientées perpendiculairement les unes aux autres et que le dispositif de sélection met simultanément en prise avec les galets d'entraînement (13, 14) soit une voie de déplacement (8) soit une voie de déplacement (9) orientée perpendiculairement à celle-ci.

3. Parc selon la revendication 2, caractérisé par le fait que les voies de déplacement (8, 9) et les rails conducteurs de courant (23, 24) de chaque direction de déplacement peuvent être manoeuvrés en commun par le dispositif de sélection.

4. Parc selon la revendication 1, caractérisé par le fait qu'au moins l'une des voies de déplacement (9) peut être sélectivement levée ou abaissée par le dispositif de sélection.

5. Parc selon l'une des revendications précédentes, caractérisé par le fait que les programmes de déplacement de chacune des deux directions de déplacement orientées perpendiculairement l'une à l'autre provoquent un comportement différent de démarrage et de freinage et/ou des vitesses d'avance différentes.
